# EUROPEAN PATENT APPLICATION

(11) **EP 2 565 694 A1**
(43) Date of publication of application: **06.03.2013**
(21) Application number: 10850605.6
(22) Date of filing: 30.04.2010
(51) Int. Cl.: G02B 7/188, G02B 23/00

(54) **OPTICAL-FIBER POSITIONING DEVICE FOR MULTI-OBJECT SPECTROMETERS**

(71) Applicant: AVS Added Value Industrial Engineering Solutions, S.L., 20600 Eibar (Guipúzcoa) (ES); Consejo Superior De Investigaciones Científicas, 28006 Madrid (ES)
(72) Inventor: CARRERA ASTIGARRAGA, Miguel, Angel, E-20600 Eibar (Guipúzcoa) (ES); ARRILLAGA ECHANIZ, Xabier, E-20600 Eibar (Guipúzcoa) (ES)
(74) Representative: Stiebe, Lars Magnus
(86) International application number: PCT/ES2010/070279
(87) International publication number: WO 2011/135113

(57) **Abstract**

Device comprising means for positioning optical-fiber (2) in a transverse plane on a support (3). The device (1) presents a fixed casing (5) and a rotating body (6) by means of a first motor (61), while it also comprises an arm (7) mounted onto the body (6) at an eccentric point with respect to the center of rotation of said body (6), the optical fiber (2) being located at the extremity of the arm (7), and the arm (7) being moved by a second motor (62), thus enabling the spatial positioning of said optical fiber (2) by means of two rotational motions. The arm (7) is mounted directly onto the shaft (66) of the motor (62), being said shaft (66) preloaded by means of angular bearings (68) and springs (69) inside the front terminal (67) of the body (6). The second motor (62) is located at the extremity of the body (6), flanged to the terminal (67).

## Description

### Object of the invention

The present invention relates to an optical-fiber positioning device for multi-object spectrometers, such as telescopes, allowing said positioning device to position the fibers in an accurate manner without interfering with the adjacent positioning devices.

### Background of the invention

Large multi-object spectrometer-based telescopes have means that comprise a plurality of optical fibers distributed over a network of hexagonal cells in order to collect the light emitted by the stars. A large telescope may comprise more than one thousand hexagonal cells, each one of which may incorporate one or more optical fibers.

In order to observe a part of the firmament, optical fibers must be repositioned so they point at the corresponding part of the firmament; however, this repositioning must be carried out individually, that is to say, each one of the hexagonal cells must be repositioned individually with respect to the rest of the cells so the corresponding optical fiber is oriented towards the correct direction.

The customary systems to position these optical fibers, such as, for example, the system developed by the LAWRENCE BERKELEY NATIONAL LABORATORY, comprise an actuator or positioning device for each optical fiber, being said actuator provided with a casing, which can be housed in an opening of a fastening support or crown. The casing of the positioning device presents a hexagonal external sleeve (at least in part of the positioning device) and a cylindrical body that can move with respect to the external casing. The positioning device is anchored to the fastening crown (for example, by means of screws through the hexagonal external sleeve). In the case of the customary one thousand optical fibers, we would have one thousand positioning devices housed in one thousand orifices of the fastening support or crown for each hexagonal cell.

In the Berkeley solution, each positioning device comprises two motors for the fiber positioning. A first motor that comprises an output shaft acting on a pinion and a racked fixed to the external casing, so the rotation of the motor shaft causes the movement of the internal body of the positioning device (the motor and the pinion also rotate because the rack is fixed with respect to the external casing). A second motor is mounted into the body of the positioning device, which rotates with the entire body of the positioning device and whose output shaft acts on a pinion. This pinion can move a linear rack by means of two auxiliary pinions, so that the rack can move radially with respect to the rotation axis of the positioning device body. The optical fiber is mounted onto the extremity of the linear rack so the combined movement of the two motors is able to position the optical fiber at any point of the circular area defined by the extremity of the fiber with respect to the rotation axis of the positioning device.

A similar solution is described in the Chinese Invention Patent no. 1193122 of CHINESE SCIENCE AND TECHNOLOGY.

These systems have many accuracy problems, mainly because they use three pinions and one linear rack. In addition, this rack is not preloaded because a preloading system does not fit within the positioning device with this configuration. In addition, the two motors are arranged in parallel, at the same height with respect to the body of the positioning device so the second motor is located far away from the linear rack. Due to the foregoing, a very thin bar must be used to transmit the movement of the output shaft of the motor to a pinion that acts on the linear rack. This arrangement also presents many accuracy problems because this thin bar can be flexed or can move radially with respect to its rotation axis.

The Chinese invention patent 2.344.786 of CHINA UNIVERSITY OF SCIENCE AND TECHNOLOGY describes the embodiment of an alternative optical fiber-positioning device for a large telescope. Said patent describes an alternative positioning device, mainly based on the fact that in order to carry out the spatial positioning of the fiber in the focal plane, two rotational motions are used instead of one single rotational motion and one radial displacement.

This positioning device mainly describes a rotation mechanism provided with a central shaft with a first drive motor and an eccentric rotation mechanism with one-arm, with respect to the central shaft, provided with a second drive motor; being the optical fiber affixed to the extremity of this arm. Therefore, the central revolution mechanism has a rotation angle, which can be positioned between -180º and +180º, that is to say, a full revolution, whereas the eccentric arm has a rotation range comprised between -90º and +90º. The optical fiber attached to the extremity of the eccentric arm can be positioned at any point of the area swept by a circle centered at the device, due to the fact that the eccentric arm presents a length equivalent to one half of the maximum positioning radius and is articulated at a point arranged at a distance equivalent to the other half of said maximum positioning radius, with respect to the center of the central shaft. The stepper motors allow a fast positioning of the fiber and make the construction of the positioning device much easier than the BERKELEY positioning device, by eliminating the sliding mechanisms and the transmissions through rack-and-pinion railways, thus minimizing backlash errors that these gears may present.

However, the positioning device described in the Chinese patent presents serious problems mainly due to the arrangement of the drive motors, which are displaced towards the intermediate and rear portion of the positioning device. This arrangement allows having greater space in the front portion of the positioning device for moving the optical fiber, which reduces the possibility of distortion in the observations due to the deformation or bending of said optical fiber; however, this arrangement requires using very thin transmission shafts and rods between the second drive motor and the eccentric arm, which causes new inaccuracies due to the torsion of the transmission rod.

In addition, the output shaft of the second motor is arranged in parallel but is offset with respect to the rotation axe of the eccentric shaft, due to which it incorporates a pinion/crown transmission system causing gaps and therefore inaccuracies in the positioning of the fiber.

This device incorporates reloading systems for the motor shafts comprising torsion springs that keep the motor shaft twisted at all times, so the motors have to work against the torsion of the spring. This way, in order to maintain the position of the fiber, the motor must be activated to maintain the torque generated by the spring. If the motor does not offer torque, due to, for example, a power outage, the device would lose its position. In order to prevent the foregoing from occurring, the motor must be working continuously, thus generating heat that is detrimental for measuring with optical fibers, such as in this case. In addition, the assembly of this preloading system is complex.

This problem is accentuated during the construction of the telescope, given that there is a high number of positioning devices in the support or focal plate of the optical fibers (the LAMOST telescope has approximately 4,000 positioning devices), having these positioning devices a small diameter and a considerable length.

### Description of the invention

The optical fiber-positioning device for multi-object spectrometers of this invention, presents technical particularities intended to offer simple and reliable optical-fiber positioning means, given its small size and low number of pieces, which allows its manufacturing process to be simpler, stronger and at a lower cost, thus obtaining a high level of operating accuracy, which is necessary in this type of applications. The optical fiber-positioning device is based on the mechanism of two rotational motions for positioning the optical fiber, described in the Chinese Patent no. 2344786 and comprises:
a casing, which can be housed into an opening of a fastening support, said casing fastening presenting means for fastening it to the support,
a body that is able to rotate inside said casing,
a first motor affixed to the body, being said first motor geared by means of a pinion in a crown wheel affixed to the casing, in such a way that the activation of the first motor produces the integral rotation of the body with respect to the casing, along a longitudinal axis of the casing,
an arm configured for coupling the optical fiber to be positioned, which comprises a rotation shaft, eccentric to the aforementioned longitudinal axis of the casing,
a second motor affixed to the body that is connected to the eccentric rotation shaft of the arm, so the activation of the second motor produces the rotation of the aforementioned eccentric rotation shaft,

According to the present invention, the positioning device comprises coupling means between the eccentric rotation shaft and an output shaft of the second motor, which are configured so that both shafts are coincident, that is to say, there is a direct coupling without transmissions whatsoever, such as, for example, the pinion/crown transmission or torsion rods, so as to eliminate gaps between both shafts. Due to the foregoing, the positioning device is simpler and more accurate.

The coupling means may comprise a clutch bushing, mounted onto an upper lid of the body and a guiding assembly of the aforementioned bushing, which is housed inside the upper lid and comprises angular bearings facing each other and pressed by torsion springs. The angular bearings have an external ring affixed to the upper lid and due to the fact that the torsion springs are arranged between the bearings by means of washers. This way, the arm is mounted directly onto the shaft of the second motor, being said shaft preloaded and gap-less. In addition, the second motor is intended to be affixed to the upper lid, so an output shaft of the motor is housed inside the aforementioned upper lid.

This way, a rigid coupling between the output shaft of the second motor and the eccentric rotation shaft of the arm providing the optical fiber is achieved.

Two important effects are obtained with this construction: the elimination of intermediate transmissions between the arm moving the optical fiber and the second motor, and in addition, said articulation is realized in a preloaded manner by means of bearings. This way, once the optical fiber is positioned, the motor does not need to continue being supplied with power to maintain said position, as is the case with other devices (such as, for example, the positioning device of the Chinese Patent no. 2344786, in which the preloading is carried out by means of a torsion spring, which is antagonist to the motor and adjusted by its continuous torque).

Since the position is maintained without the influence of the motor, two major improvements are obtained: energy is saved and the heat generated by the electric motor is reduced because it can be turned off, thus decreasing the effect of the temperature on the construction materials and preventing the inaccuracies of the systems subject to balances by means of opposing torques. The elimination of the transmission rod or shaft also annuls the source of inaccuracies caused by the torsion of said rod.

The second motor may be mounted onto the body at a position symmetrical to the position of the first motor with respect to the longitudinal axis of the casing, being their respective shafts approximately aligned and longitudinally consecutive within the body.

Likewise, the support fastening means are intended to be arranged in correspondence to the crown wheel, so the transmission of the first motor is arranged at the strongest area, instead of placing the transmission at an extremity of the body and twisting the entire body from this end position, as is the case of the Berkeley device. In addition, the exit of the cables of said first motor is the natural one, through the rear portion of the body, thus facilitating the mounting of the device.

The device may comprise preloading means for the first motor that comprise a flange mounted onto the shaft of the first motor and configured to pivot with respect to a pivoting axis, parallel to the motor shaft and a spring configured to pivot the aforementioned flange with respect to the aforementioned pivoting axis, thus maintaining the pinion pressed against the crown wheel. This preloading system allows eliminating gaps, and therefore, increases accuracy and repetitiveness during the fiber positioning. In addition, the motor shaft does not suffer any inappropriate flexion, and the preloading system also allows the motor to be disconnected from the power supply as soon as the device has been positioned, thus saving energy and reducing the thermal effect of the heat produced by the motor in continuous operation, as it happens in other cases.

This device of the invention preferably comprises a casing, presenting, in correspondence with the fastening means to the support, an external hexagonal prismatic contour with a longitudinal keyway for coupling it to the support, which allows establishing a one single mounting position, thus avoiding any eventual risk regarding positioning at a wrong angle. In order to attach the device to the support, it has been provided that said external hexagonal prismatic contour has longitudinal recesses to affix said rear portion of the casing into the rear portion of the support by tightening screws housed in said recesses, each screw affixing the adjacent devices simultaneously. These screws do not require any special configuration; they only need to be conventional metric screws whose length and neck are adjusted so as to allow the devices abutment and so as to penetrate into the support.

In order to prevent problems caused by the uncertainty due to the elastic limit in the use of row bars and contacts used in other devices, it was decided to use different reference means and mechanical stops, which on the one hand, make sure that the body does not rotate more than one revolution approximately, which could imply damages to the optical fiber, and on the other hand, serve to establish simultaneously an effective and reliable positioning reference.

Therefore, a pivoting stop has been provided between the body and the casing, which is displaceable about a fixed pivot and which can be coupled during their mutual displacement with an antagonist tooth, allowing a rotation greater than 360º for the body. More specifically, the limited rotation that the body can carry out is comprised between 0º and 365º. This pivoting stop establishes the 0º reference by increasing the intensity of the motor caused by mechanical stopping when it meets the antagonist tooth at the first position.

The optical fiber is attached to the arm by means of a button, which presents, in its front portion, a focusing micro-lens for the light entering the aforementioned optical fiber, which is subsequently coupled to a cover. The arm presents a clamp that establishes a coupling by means of three perimeter points of contact with the button, while said arm presents a tightening screw securing the parallelism of the button in the focal plane.

It has been provided that the device comprises a plurality of optical fibers housed inside the cover and focused on the micro-lens of the button.

The electric motors are preferably of the stepper type, which are configurable for a full step, half step or microstep drive. These motors only require power when the movement of the optical fiber is necessary; in the stationary position of said optical fiber, the motor does not need to be supplied with power, thus avoiding heat building and the wear and deformation of the device mechanical elements.

The motors comprise a position encoder connected thereof, allowing them to be controlled and monitored at all times. The direct or embedded association of said position encoder allows greater safety in the angular positioning of the motor.

With the purpose of achieving better mounting conditions, the rotating portion of the device is intended to be configured by two independent modules; said first module comprising the terminal, the second motor, the arm and the preloading means of the arm; and the second module comprising the lower body, the first motor, the gearing pinion and the preloading means. This way, both portions can be mounted and their correct operation can be verified prior to the full assembly.

The space of the cylindrical body provided for the passage of the optical fiber from the rear portion of the positioning device stretches, along an arch, from the periphery of said body to a position near the center of rotation of the body. With the foregoing, by means of the combined movement of the two rotational motions, the optical fiber may be placed at any possible position within the circle covered by said body, without any collision or interference risk among adjacent positioning devices. At the maximum extension position of the arm, the angle covered by said arm reaches up to 225º, so that in the case of a collision between two arms of adjacent devices, there is sufficient rotational freedom to fix it without damages.

In turn, the body presents, in correspondence with the end of the internal space trajectory, an arm stop, defining an angular point of reference for the position of said arm, corresponding to the center of the body or the central position that the optical fiber can acquire.

### Description of the drawings

Next, in order to supplement the description, which is being made and for better comprehension purposes of the characteristics of the invention, a set of drawings accompany the present specification in an illustrative rather than limitative manner, which represent the following:
- Figure 1 shows a perspective view of a device.
- Figure 2 shows a plant view of a support of the telescope, in which several devices are mounted, wherein one of the openings intended to house a device, is shown empty. For simplification purposes, the support being represented only shows capacity for seven devices, even though there are many more devices in practice.

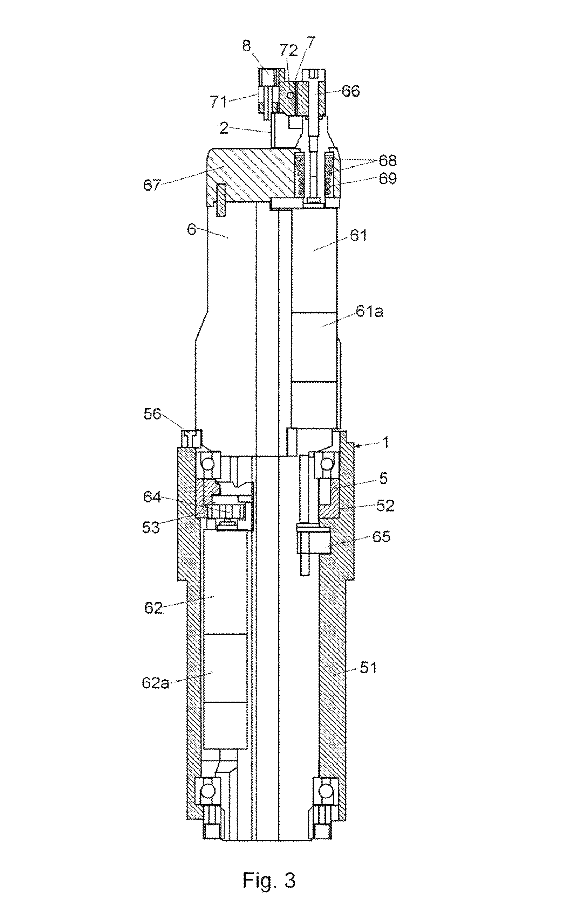

- Figure 3 shows a longitudinal section of a device.

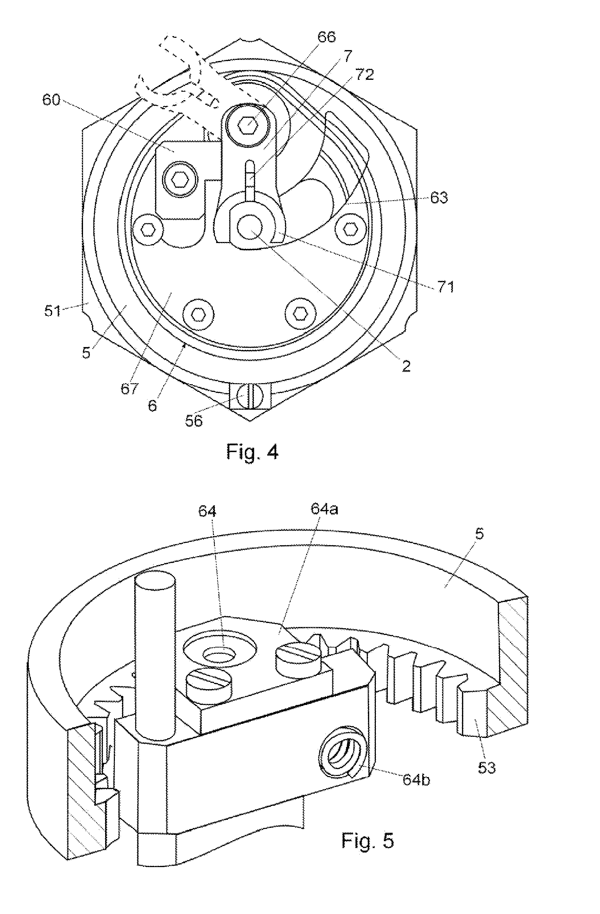

- Figure 4 shows a view through the front extremity of a device.
- Figure 5 shows a detail of the coupling of the pinion of the first motor to the crown wheel of the casing.
- Figures 6 and 7 show the two end positions of the trajectory of the body in its rotation inside the casing.
- Figure 8 shows a perspective view of the button bearing the micro-lens in the extremity of the optical fiber cover with multiple fibers inside.

### Preferred embodiment of the invention

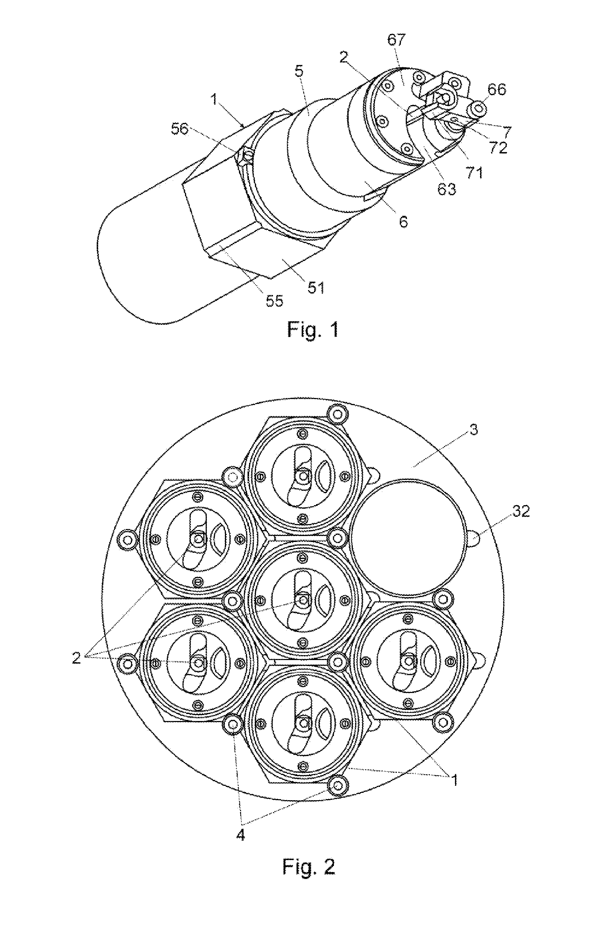

As it can be seen in the figures referenced above, the positioning device (1) of this invention comprises means for positioning the optical fiber (2) in a transverse plane, said device (1) being arranged on a fastening support (3). Figure 2 shows a simplified case in which the support (3) presents capacity for seven devices (1) in the respective openings (31), although this support (3) tends to present housing openings (31) for thousands of devices (1) in practical embodiments, which are arranged independently and distributed according to a hexagonal matrix, by means of screws (4).

Each device (1), comprises a casing (5) in which a rotating cylindrical body (6) is housed, said casing (5) comprising a hexagonal prismatic configuration, external to the coupling area to the support (3), and a rear cylindrical body (51) for housing a first motor (62). The casing (5) is joined to the support (3) by means of screws (4), arranged in three longitudinal recesses (55) of the devices (1) and screwed to the support (3). In the hexagonal prismatic contour of the casing, there is a keyway (56), which can be coupled in a housing (32) that defines the one specific orientation of the device (1) in the opening (31) of the support (3).

The cylindrical body (6) comprises a pair of electric motors (61 and 62) for its movement, being said electric motors (61 and 62) aligned approximately along the length of the body (6). The first electric motor (62), arranged on the rear of the body (6), causes the movement of said cylindrical body (6) with respect to the casing (5) and the second electric motor (61), arranged on the front, is associated to an arm (7) for the movement of the optical fiber (2) through a space (63) of said body (6).

The optical fiber (2) is positioned at any point of the transverse plane of the device (1) body (6) by means of two rotational motions. In a first rotation, driven by the first electric motor (62) with respect to the casing (5), the rotation of the body (6) is arranged at an angle of 365º sexagesimal degrees. In a second rotation, the arm (7) bearing the optical fiber (2) is coupled directly onto the shaft of the second motor (61) at an eccentric point with respect to the center of rotation of the body (6), an angle of 225º covered sexagesimal degrees being defined for said arm (7) so that the free extremity of said arm (7) covers any radial position between the perimeter of the body (6) or the exterior and the center thereof, in order to position the optical fiber (2).

The external casing (5) of the device (1) comprises internally, a crown wheel (53), where a movement pinion (64) is engaged. This movement pinion (64) is directly associated to the extremity of the shaft of the first motor (62), being said pinion (64) preloaded by means of a flange (64a) mounted onto the shaft of the first motor (62) and configured to pivot with respect to a pivoting axis parallel to the shaft of the first motor (62).

The device incorporates a spring (64b) configured to pivot the aforementioned flange (64a) with respect to the aforementioned pivoting axis, maintaining the pinion (64) pressed against the crown wheel (53).

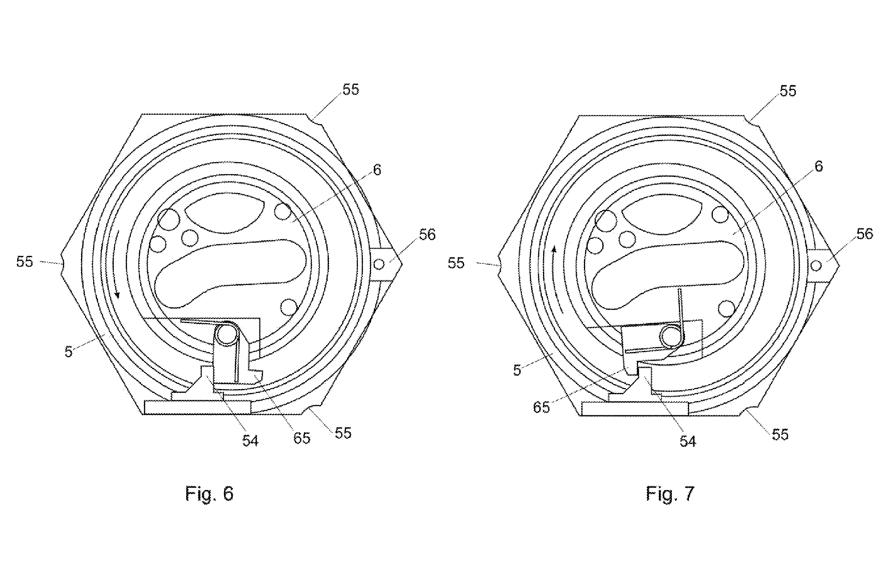

In order to limit the displacement or first rotation of the body (6) with respect to the casing (5), to a 365º sexagesimal degrees angle, the body (6) is intended to present, on one of its sides, a travel stop (65) swinging on a pivot forced by a spring, whereas in the internal face of the casing, (5) a protruding antagonistic tooth (54) can be found, interfering with the stop (65) on both sides, as represented in figures 6 and 7. Said contact is detected by means of the electric intensity increase of the first motor (61) when it attempts to advance beyond the position blocked by said stop (65).

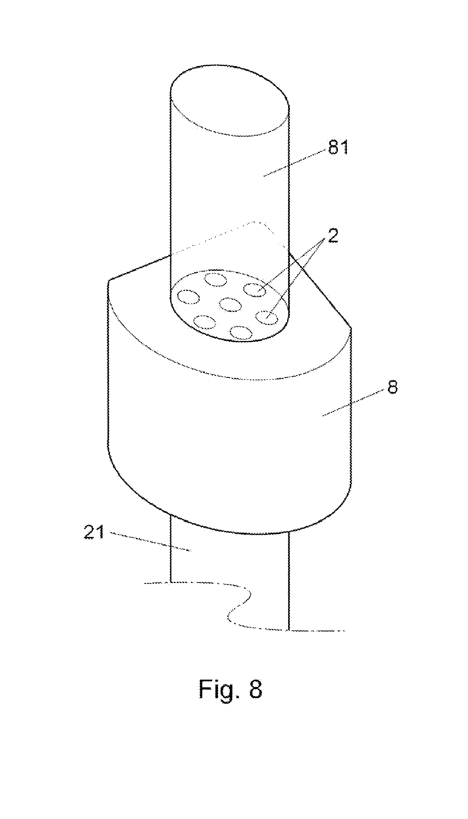

The second motor (61) is arranged in the upper portion of the body (6), with its shaft (66) emerging from an end terminal (67) by the front portion of the cylindrical body (6) for coupling directly the arm (7) to said shaft (66), said second motor (61) being flanged to the terminal. This cylindrical body (6) and the terminal (67) present the space (63) through which passes the optical fiber (2), shaped as an arch from the periphery to a position near the center of rotation of the body (6). Said space (63) defines a trail over which the extremity of the arm (7) is displaceable. The shaft (66) of the motor is preloaded by means of two angular bearings (68) facing each other and preloaded by means of springs (69). The optical fiber is attached to a button (8), which presents a micro-lens (81) in its front portion and a cover (21) is coupled to its rear portion. This cover (21) houses one or more optical fibers (2) as such, and as represented in figure 8.

The arm (7) presents at its extremity, a clamp (71) for the button (8) by means of three points of contact, in a firm and gapless manner and secured by means of a transverse screw (72), maintaining the parallelism of the aforementioned button (8) with the focal plane of the support (3).

The terminal (67) presents, at its upper portion, a stop limit (60) when the optical fiber (2) is positioned in the center of rotation of the body (6).

As mentioned above, both motors (61 and 62) are mounted approximately aligned longitudinally within the rotating body (6). Said electric motors (61 and 62) are of the stepper type, configurable for full step, half step or microstep in order to obtain different positioning resolutions. Each motor (61 and 62) is associated to a position encoder (61 a and 62a) respectively that allows controlling constantly the position of the optical fiber (2).

After describing the nature of the invention in a sufficient manner, as well as providing a preferred embodiment example, it is thereby recorded for all relevant purposes that the materials, shape, size and arrangement of the elements described may be modified, as long as this modification does not imply an alteration of the essential characteristics of the invention claimed below.

## Claims

1. Optical fiber-positioning device for multi-object spectrometers, which comprises
a casing (5), which can be housed into an opening (31) of a fastening support (3), said casing (5) presenting means for fastening it to the support (3),
a body (6) that is able to rotate inside said casing,
a first motor (62) affixed to the body (6), being said first motor (62) engaged by means of a pinion (64) in a crown wheel (53) affixed to the casing (5), in such a way that the activation of the first motor (62) produces the integral rotation of the body (6) with respect to the casing (5) along a longitudinal axis of the casing (5),
an arm (7) configured for coupling the optical fiber (2) to be positioned, which comprises a rotation shaft, eccentric to the aforementioned longitudinal axis of the casing,
a second motor (61) affixed to the body (6) that is connected to the eccentric rotation shaft of the arm (7), so the activation of the second motor produces the rotation of the aforementioned eccentric rotation shaft,
**characterized in that** it comprises coupling means between the eccentric rotation shaft and an output shaft of the second motor, which are configured so both shafts are coincident.

2. Device according to claim 1, wherein the coupling means comprise a clutch bushing (73), mounted onto an upper lid (67) of the body (6) and a guiding assembly of the aforementioned bushing, which is housed inside the upper lid (67) and comprises angular bearings (68) facing each other and pressed by torsion springs (69).

3. Device according to claim 2, wherein the angular bearings (68) have an external ring affixed to the upper lid (67) and the torsion springs (69) are arranged between the bearings (68) by means of washers (74).

4. Device according to claims 1 to 3, wherein the second motor (61) is affixed to an upper lid (67), in such a way that an output shaft of the motor is housed inside the aforementioned upper lid.

5. Device according to any one of the previous claims, wherein the second motor (61) is mounted onto the body (6) in a position symmetrical to the position of the first motor (62) with respect to the longitudinal axis of the casing (5).

6. Device according to any one of the previous claims, wherein the fastening means to the support (3) are arranged in correspondence to the crown wheel (53).

7. Device according to any one of the previous claims, wherein the first motor (62) and the second motor (61) are mounted approximately aligned and longitudinally consecutive within the rotating body (6).

8. Device according to any one of the previous claims, which comprises preloading means for the first motor (62), which comprise a flange (64a) mounted onto the shaft of the first motor (62) and is configured to pivot with respect to a pivoting axis, parallel to the shaft of the first motor (62), and a spring (64b) configured to pivot the aforementioned flange (64a) with respect to the aforementioned pivoting axis, maintaining the pinion (64) pressed against the crown wheel (53).

9. Device according to any one of the previous claims, wherein the casing (5) presents, in line with the fastening means to the support (3), an external hexagonal prismatic contour with a longitudinal keyway (56) for coupling it to the support, and longitudinal recesses (55) for affixing said casing (5) into the rear portion of the support (3) by inserting the keyway (56) into a housing (32) and tightening a number of screws (4) housed in said recesses (55), each screw (4) affixing several adjacent devices (1) simultaneously.

10. Device according to any one of the previous claims, which comprises a travel stop (65) mounted onto the body (6) in a swinging manner on a fixed pivot and a tooth (54) mounted onto the casing (5) in a fixed manner, in such a way that along the rotational motion of the body (6) with regard to the casing (5), there is a point of contact between the travel stop (65) and the tooth (54), that defines a position of reference for the body (6) and the stop (54) comprises an elastic spring that allows swinging the travel stop (65) so the body (6) is able to carry out a 365º rotation from the position of reference, with regard to the casing (5).

11. Device according to any one of the previous claims, wherein the optical fiber (2) is attached to the arm (7) by means of a button (8), which presents, in its front portion, a focusing micro-lens (81) for the light entering the aforementioned optical fiber (2), which is subsequently coupled to a protective cover (21).

12. Device according to claim 11, wherein the arm (7) presents a clamp (71) establishing a coupling by means of three perimeter points of contact with the button (8), a screw (72) tightening the aforementioned clamp (71) being located in said arm (7), which secures the parallelism of the button (8) in the focal plane.

13. Device according to claim 11, which comprises a plurality of optical fibers (2) housed inside the cover (21) and focused on the micro-lens (81) of the button (8).

14. Device according to any one of the previous claims, in which the motors (61 and 62) are of the stepper type, and present a position encoder (61 a and 62a) of the incremental type associated thereof, respectively.
